# EUROPEAN PATENT SPECIFICATION

(11) **EP 4 198 739 B1**
(45) Date of publication and mention of the grant of the patent: **11.06.2025**
(21) Application number: 22202734.4
(22) Date of filing: 20.10.2022
(51) Int. Cl.: G06F 11/30, G06F 11/34, G06F 11/36, G06F 11/07

(54) **MATCHMAKING-BASED ENHANCED DEBUGGING FOR MICROSERVICES ARCHITECTURES**
AUF ANPASSUNGSVERFAHREN BASIERTE VERBESSERTE FEHLERBESEITIGUNG FÜR MIKRODIENSTARCHITEKTUREN
DÉBOGAGE AMÉLIORÉ BASÉ SUR LA MISE EN CORRESPONDANCE POUR ARCHITECTURES DE MICROSERVICES

(30) Priority: 20.12.2021 US 202117556044
(43) Date of publication of application: 21.06.2023
(73) Proprietor: INTEL Corporation, Santa Clara, CA 95054 (US)
(72) Inventor: POORNACHANDRAN, Rajesh, Portland, 97229 (US); DOSHI, Kshitij, Tempe, 85282 (US); GUIM BERNAT, Francesc, Barcelona (ES); KUMAR, Karthik, Chandler, 85249 (US); CARRANZA, Marcos, Portland, 97229 (US); MARTINEZ-SPESSOT, Cesar, Hillsboro, 97123 (US); GUZMAN, Mateo, Beaverton, 97078 (US)
(74) Representative: Viering, Jentschura & Partner mbB Patent- und Rechtsanwälte

(56) References cited:
- WO-A1-2016/191639
- US-A1- 2020 228 433
- US-A1- 2021 117 249

## Description

### FIELD

Embodiments relate generally to data processing and more particularly to matchmaking-based enhanced debugging for microservices architectures.

### BACKGROUND OF THE DESCRIPTION

Datacenters often leverage a microservice architecture to provide for network infrastructure services. A microservice architecture can arrange an application as a collection of loosely-coupled microservices. Microservices can refer to processes that communicate over a network to fulfill a goal using technology-agnostic protocols. In some cases, the microservices may be deployed using a container orchestration platform providing containerized workloads and/or services. The container orchestration platforms may utilize a service mesh to manage the high volume of network-based inter-process communication among the microservices. The service mesh is a dedicated software infrastructure layer for the microservices that includes elements to enable the communication among the microservices to be fast, reliable, and secure. The service mesh provides capabilities including service discovery, load balancing, encryption, observability, traceability, and authentication and authorization. The microservices deployment model provided by the service mesh is becoming increasingly elastic, providing flexibility to scale up and scale down microservices.

In a service mesh environment, a typical worker node in a compute cluster can handle hundreds of container workloads at the same time. These worker nodes may also have statically-attached specialized hardware accelerators optimized for compute intensive tasks. For instance, a class of hardware accelerators can be optimized to efficiently run cryptography and compression algorithms, or to run machine-learning acceleration algorithms. Such hardware accelerators may be provided as a form of disaggregated computing, where the workloads are distributed on disaggregated compute resources, such as CPUs, GPUs, and hardware accelerators (including field programmable gate arrays (FPGAs)), that are connected via a network instead of being on the same platform and connected via physical links such as peripheral component interconnect express (PCIe). Disaggregated computing enables improved resource utilization and lowers ownership costs by enabling more efficient use of available resources. Disaggregated computing also enables pooling a large number of hardware accelerators for large computation making the computation more efficient and better performing.

As the elasticity of deployment of microservices increases and as microservices architecture transitions to utilizing disaggregated computing resources, the amount of data collected as part of trace and performance telemetry collection can become burdensome. Furthermore, the amount of data and information generated by trace and performance telemetry collection can become problematic for networking of the microservices, considering that high volumes of data are transmitted in short periods of time.
The document US 2020/228433 A1 discloses a distributed tracing system that detects an error or a slow query generated in an application and presents a state in the application. The distributed tracing system also traces and records transactions in the application. The distributed tracing system performs monitoring and performance analysis of the system. An additional container called Sidecar (Proxy) is deployed for performing tracing.

### BRIEF DESCRIPTION OF THE DRAWINGS

So that the manner in which the above recited features of the present embodiments can be understood in detail, a more particular description of the embodiments, briefly summarized above, may be had by reference to embodiments, some of which are illustrated in the appended drawings. It is to be noted, however, that the appended drawings illustrate typical embodiments and are therefore not to be considered limiting of its scope. The figures are not to scale. In general, the same reference numbers are used throughout the drawing(s) and accompanying written description to refer to the same or like parts.
**FIG. 1** illustrates a datacenter system that provides for matchmaking-based enhanced debugging for microservices architectures, in accordance with implementations herein.
**FIG. 2** illustrates a block diagram of components of a computing platform in a datacenter system, according to implementations herein.
**FIG. 3** is a block diagram of a service platform implementing matchmaking-based enhanced debugging for microservices architectures, in accordance with implementations herein.
**FIG. 4** is a flow diagram illustrating an embodiment of a method for a microservice-level implementation of matchmaking-based enhanced debugging for microservices architectures.
**FIG. 5** is a flow diagram illustrating an embodiment of a method for a service-level implementation of matchmaking-based enhanced debugging for microservices architectures.
**FIG. 6** is a schematic diagram of an illustrative electronic computing device to enable matchmaking-based enhanced debugging for microservices architectures, according to some embodiments.

### DETAILED DESCRIPTION

Implementations of the disclosure describe matchmaking-based enhanced debugging for microservices architectures.

Cloud service providers (CSPs) are deploying solutions in datacenters where processing of a workload is distributed on various compute resources, such as central processing units (CPUs), graphics processing units (GPUs), and/or hardware accelerators (including, but not limited to, GPUs, field programmable gate arrays (FPGAs), application-specific integrated circuits (ASICs), cryptographic accelerators, compression accelerators, and so on). Traditionally, these compute resources were running on the same platform and connected via physical communication links, such as peripheral component interconnect express (PCIe).

However, disaggregated computing is on the rise in data centers. With disaggregated computing, CSPs are deploying solutions where processing of a workload is distributed on disaggregated compute resources, such as CPUs, GPUs, and hardware accelerators (including FPGAs, ASICs, etc.), that are connected via a network instead of being on the same platform and connected via physical links such as PCIe. Disaggregated computing enables improved resource utilization and lowers ownership costs by enabling more efficient use of available resources. Disaggregated computing also enables pooling a large number of hardware accelerators for large computation making the computation more efficient and better performing.

Hardware accelerators (also referred to herein as a hardware accelerator resources, hardware accelerator devices, accelerator resource, accelerator device, and/or extended resource) as discussed herein may refer to any of special-purpose central processing units (CPUs), graphics processing units (GPUs), general purpose GPUs (GPGPUs), field programmable gate arrays (FPGAs), application-specific integrated circuits (ASICs), inference accelerators, cryptographic accelerators, compression accelerators, other special-purpose hardware accelerators, and so on.

Moreover, the datacenters used by CSPs to deploy a service mesh often leverage a microservice architecture to provide for network infrastructure services of the service mesh. A microservice architecture can arrange an application as a collection of loosely-coupled microservices. The microservices may be the processes that communicate over a network to fulfill a goal using technology-agnostic protocols. In some cases, the microservices can be deployed using a container orchestration platform providing containerized workloads and/or services. In some examples, the service may be a large service comprising hundreds of microservices working in conjunction with each other or may be a modest individual service. A workload may refer to a resource running on the cloud consuming resources, such as computing power. In some embodiments, an application, service, or microservice may be referred to as a workload, which denotes the workload can be moved around between different cloud platforms or from on-premises to the cloud or vice-versa without any dependencies or hassle.

The container orchestration platforms may utilize a service mesh to manage the high volume of network-based inter-process communication among the microservices. The service mesh is a dedicated software infrastructure layer for the microservices that includes elements to enable the communication among the microservices to be fast, reliable, and secure. The service mesh provides capabilities including service discovery, load balancing, encryption, observability, traceability, and authentication and authorization.

As previously noted, the microservices deployment model provided by the service mesh is becoming increasingly elastic, providing flexibility to scale up and scale down microservices. As the elasticity of deployment of microservices increases and as microservices architecture transitions to utilizing disaggregated computing resources, the amount of data collected as part of trace and performance telemetry collection can become burdensome in terms of interpretation (e.g., especially in real time).

Trace and performance telemetry collection is a heavy process that cannot run all the time in production environments. Conventionally, when an issue occurs with a service in the service mesh, a service expert is called in to manually enable tracing or additional logging during specific time windows, so that enough data is collected for analysis and to hopefully identify the issue. This is even more complex on highly distributed systems using microservices architectures. In addition, microservices utilize additional platform components that are running under different privileges, which is complex to match.

Furthermore, the amount of data and information generated by trace and performance telemetry collection can become problematic for networking of the microservices, considering that high volumes of data are transmitted in short periods of time. The amount of information generated is a risk for networking, considering that high volumes of data are transmitted in short periods of time.

Implementations of the disclosure address the above-noted technical drawbacks by providing for matchmaking-based enhanced debugging for microservices architectures. In implementations herein, techniques are provided for matchmaking-based enhanced debugging for microservices architectures. In implementations herein, a sidecar is utilized for each microservice, where the sidecar allows for distributed tracing as a streaming service, with tag information generated by the sidecar. In some implementations, the distributed tracing as a streaming service, with generated tag information, may be performed by other service/microservice components than the sidecar.

An anomaly detection component of the sidecar can analyze telemetry data collected from a service platform hosting the microservice (and sidecar) and includes hooks to capture errors in the service (application) associated with an anomaly. Once an anomaly is detected, an enhanced debug and trace component of the sidecar can enable a debug bug for the microservice. During the debug mode, trace and performance telemetry collection proceeds simultaneously for different components in a stack where the components do not all run at the same privilege; for example, PMU counters or device counters contain indications of activities or errors that span more than just the microservice(s) that are of interest. In some cases, these counters, OS activity traces, etc., should be processed separately, and the portions specific to a given microservice can be broken out or projected. Such is the case, for example, with Wireshark traces, KU traces, etc.

The enhanced debug and trace component can perform a matchmaking process on the collected debug data, where the matchmaking process can introduce timestamped markers and tags in the telemetry stream so that information streams that should be separated out can be indexed against these markers into a global collection and analysis agent. In implementations here, different levels of traces can be enabled based on service policies and/or application-specific service level agreements (SLA)/service level objectives (SLO). The global agent can then respond to these markers and return information it indexes for these markers. As a result, scheduler traces for all threads (other than the threads identified by the sidecar proxy) are anonymized, obfuscated, or normalized out, depending on the privilege of the entity that furnishes the marker along with a query.

The on-demand distributed tracing of implementations herein can reduce the data traffic in the service platform deploying the microservices of the service. This can also contribute to performing a comprehensive analysis of a failure on complex systems.

Implementations of the discosure provide technical advantages over the conventional approaches discussed above. One technical advantage is that implementations reduce a time window used to capture relevant information about issues happening in production systems, automatically and temporarily reconfiguring the system for debug/tracing mode. Furthermore, the use of sidecars to enable the enhanced debugging described herein allows for managing telemetry information at different privileges, making the dataset for analysis more complete.

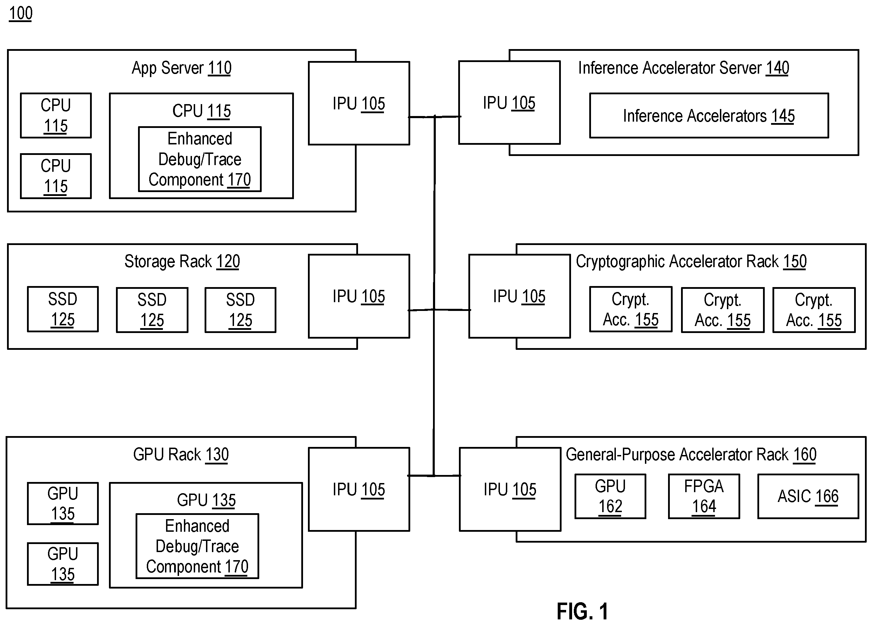

**FIG.** 1 illustrates a datacenter system 100 that provides for matchmaking-based enhanced debugging for microservices architectures, in accordance with implementations herein. Datacenter system 100 illustrates an example data center (for example, hosted by a cloud service provider (CSP)) providing a variety of XPUs (heterogeneous processing units) for processing tasks at the datacenter, where an XPU can include one or more of: a central processing unit (CPU) 115, a graphics processing unit (GPU) 135 (including a general purpose GPU (GPGPU), ASICs, or other processing units (e.g., accelerators 145, 155, 166, inference accelerators 145, cryptographic accelerators 155, programmable or fixed function FPGAs 164, application-specific integrated circuit (ASICs) 166, compression accelerators, and so on). The datacenter may also provide storage units for data storage tasks, as well. The storage units may include solid state drive (SSD) 125, for example. The XPUs and/or storage units may be hosted with similar-type units (e.g., CPUS 115 hosted on an application server (app server) 110, SSDs 125 hosted on a storage rack 120, GPUs 135 hosted on a GPU rack 130, inference accelerators 145 hosted on an inference accelerator server 140, cryptographic accelerators 155 hosted on a cryptographic accelerator rack 150, and general-purpose accelerators 162, 164, 166 hosted on accelerator rack 160.

The datacenter of system 100 provides its hosted processing components 115, 125, 135, 145, 155, 162, 164, 166 with a variety of offloads using, for example, IPUs 105 that are directly attached to the respective host processing component. Although IPUs 105 are discussed for example purposes, other programmable network devices, such as DPUs or SmartNICs, may be used interchangeable for IPUs 105 herein. The offloads provided may be networking, storage, security, etc. This allows the processing components 115, 125, 135, 145, 155, 162, 164, 166 to run without a hypervisor, and provides CSPs the capability of renting out the entire host in a datacenter to their security-minded customers, or avoid cross-talk and other problems associated with multitenant hosts.

An IPU 105 can provide a role in data centers by providing the datacenter operator, such as a Cloud Service Provider (CSP), a control point for security, acceleration, telemetry and service orchestration. IPU 105 architecture may build upon existing Smart Network Interface Card (SmartNIC) features and is a part of controlling security and data acceleration within and across distributed platforms. It is a secure domain controlled by CSPs for managing a platform, providing services to tenants, and securing access into the data center network. The IPU 105 increases the performance and predictability for distributed runtimes and enables scaling to multi-terabit throughputs by offloading host services, reliable transport, and optimizing data copies.

IPUs 105 have grown in complexity over the years, starting with foundational NICs, whose sole purpose was to get packets into the host and out of it. With the addition of networking software offload, the NICs evolved to become SmartNICs, that are capable of offloading functions, such as VSwitch, VIRTIO-Net, AVF, etc. Remote disaggregated storage architectures provide a further evolution, where compute and storage are not colocated anymore, but large compute clusters are connected to large storage clusters over the network. Increase in network speeds, and evolution of protocols made this a possibility. One of the advantages that remote disaggregated storage offers over direct attached storage is that compute and memory can be developed and updated at different cadences. The amount of memory that is attached to a compute node is not limited by physical addition or removal of hard-drives anymore, but can be hot-plugged as a PF to a PCIe Switch. Technologies such as Smart End Point enable IPUs to have firmwarecontrolled switches, along the PCIe Switch itself to not be limited by hardware implementations.

As discussed above, embodiments herein provide for matchmaking-based enhanced debugging for microservices architectures. In one implementation, datacenter system 100 includes one or more resources that can implement an enhanced debug/trace component 170 to provide the matchmaking-based enhanced debugging for microservices architectures. For illustrative example purposes, enhanced debug/trace component 170 is shown in the CPU 115 and GPU 135, respectively, of datacenter system 100. However, enhanced debug/trace component 170 may operate in one or more of the various other disaggregated resources of datacenter system 100 in accordance with implementations herein. As such, the resources of datacenter system 100 may be in different platforms connected via a network (not shown) in the datacenter system 100. In some implementations, software and/or middleware can cause the resources of datacenter system 100 to logically appear to be in the same platform. Furthermore, transport protocols implemented in software and/or hardware (e.g., network interface cards (NICs)) can make the remote resources logically appear as if they are local resources as well.

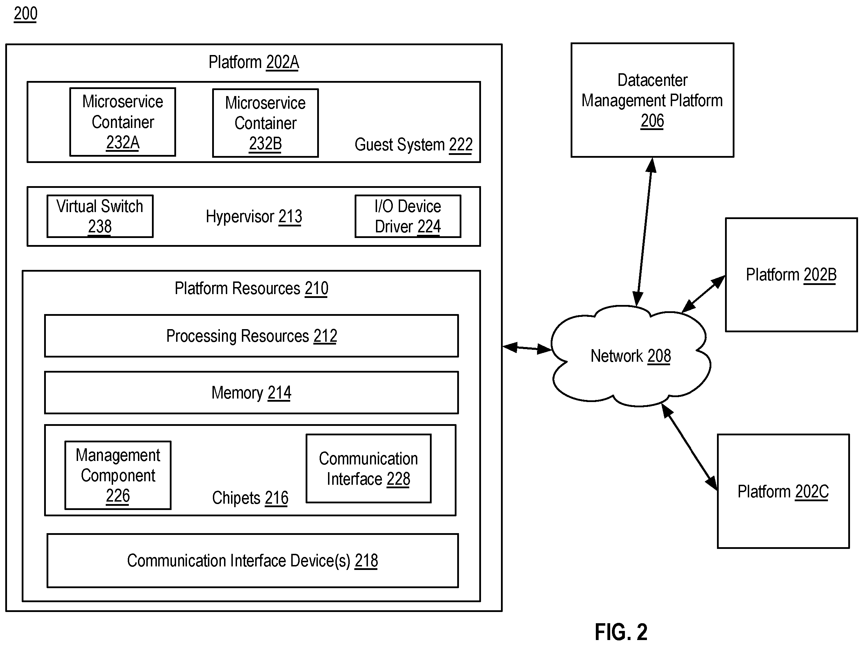

Further details of the enhanced debug/trace component 170 implementing the matchmaking-based enhanced debugging for microservices architectures as described below with respect to FIGS. 2-6.

**FIG. 2** illustrates a block diagram of components of a computing platform 202A in a datacenter system 200, according to implementations herein. In the embodiment depicted, platforms 202A, 202B, and 202C (collectively referred to herein as platforms 202), along with a data center management platform 206 are interconnected via network 208. In other embodiments, a computer system may include any suitable number of (i.e., one or more) platforms. In some embodiments (e.g., when a computer system includes a single platform), all or a portion of the datacenter management platform 206 may be included on a platform 202.

A platform 202 may include platform resources 210 with one or more processing resources 212 (e.g., XPUs including CPUs, GPUs, FPGAs, ASICs, other hardware accelerators), memories 214 (which may include any number of different modules), chipsets 216, communication interface device(s) 218, and any other suitable hardware and/or software to execute a hypervisor 213 or other operating system capable of executing workloads associated with applications running on platform 202.

In some embodiments, a platform 202 may function as a host platform for one or more guest systems 222 that invoke these applications. Platform 202A may represent any suitable computing environment, such as a high-performance computing environment, a data center, a communications service provider infrastructure (e.g., one or more portions of an Evolved Packet Core), an in-memory computing environment, a computing system of a vehicle (e.g., an automobile or airplane), an Internet of Things (IoT) environment, an industrial control system, other computing environment, or combination thereof.

Each platform 202 may include platform resources 210. Platform resources 210 can include, among other logic enabling the functionality of platform 202, one or more processing resources 212 (such as CPUs, GPUs, FPGAs, other hardware accelerators, etc.), memory 214, one or more chipsets 216, and communication interface devices 228. Although three platforms are illustrated, computer platform 202A may be interconnected with any suitable number of platforms. In various embodiments, a platform 202 may reside on a circuit board that is installed in a chassis, rack, or other suitable structure that comprises multiple platforms coupled together through network 208 (which may comprise, e.g., a rack or backplane switch).

In the case of processing resources 212 comprising CPUs, the CPUs may each comprise any suitable number of processor cores and supporting logic (e.g., uncores). The cores may be coupled to each other, to memory 214, to at least one chipset 216, and / or to a communication interface device 218, through one or more controllers residing on the processing resource 212 (e.g., CPU) and/or chipset 216. In some embodiments, a processing resource 212 is embodied within a socket that is permanently or removably coupled to platform 202A. A platform 202 may include any suitable number of processing resources 212.

Memory 214 may comprise any form of volatile or nonvolatile memory including, without limitation, magnetic media (e.g., one or more tape drives), optical media, random access memory (RAM), read-only memory (ROM), flash memory, removable media, or any other suitable local or remote memory component or components. Memory 214 may be used for short, medium, and/or long term storage by platform 202A. Memory 214 may store any suitable data or information utilized by platform resources 210, including software embedded in a computer readable medium, and/or encoded logic incorporated in hardware or otherwise stored (e.g., firmware). Memory 214 may store data that is used by cores of processing resources 212. In some embodiments, memory 214 may also comprise storage for instructions that may be executed by the processing resources 212 (e.g., cores of CPUs) or other processing elements (e.g., logic resident on chipsets 216) to provide functionality associated with the management component 226 or other components of platform resources 210.

A platform 202 may also include one or more chipsets 216 comprising any suitable logic to support the operation of the processing resources 212. In various embodiments, chipset 216 may reside on the same die or package as a processing resource 212 or on one or more different dies or packages. Each chipset may support any suitable number of processing resources 212. A chipset 216 may also include one or more controllers to couple other components of platform resources 210 (e.g., communication interface device 228 or memory 214) to one or more processing resources 212.

In the embodiment depicted, each chipset 216 also includes a management component 226. Management component 226 may include any suitable logic to support the operation of chipset 216. In a particular embodiment, a management component 226 can collect real-time telemetry data from the chipset 216, the processing resources 212, and/or memory 214 managed by the chipset 216, other components of platform resources 210, and/or various connections between components of platform resources 210.

Chipsets 216 also each include a communication interface device 228. Communication interface device 228 may be used for the communication of signaling and/or data between chipset 216 and one or more I/O devices, one or more networks 208, and/or one or more devices coupled to network 208 (e.g., system management platform 206). For example, communication interface device 228 may be used to send and receive network traffic such as data packets. In a particular embodiment, a communication interface device 228 comprises one or more physical network interface controllers (NICs), also known as network interface cards or network adapters. A NIC may include electronic circuitry to communicate using any suitable physical layer and data link layer standard such as Ethernet (e.g., as defined by an IEEE 802.3 standard), FibreChannel, InfiniBand, Wi-Fi, or other suitable standard. A NIC may include one or more physical ports that may couple to a cable (e.g., an Ethernet cable). A NIC may enable communication between any suitable element of chipset 216 (e.g., management component 226) and another device coupled to network 208. In various embodiments, a NIC may be integrated with the chipset 216 (i.e., may be on the same integrated circuit or circuit board as the rest of the chipset logic) or may be on a different integrated circuit or circuit board that is electromechanically coupled to the chipset.

Platform resources 210 may include an additional communication interface 228. Similar to communication interface devices 218, communication interfaces 228 may be used for the communication of signaling and/or data between platform resources 210 and one or more networks 208 and one or more devices coupled to the network 208. For example, communication interface 228 may be used to send and receive network traffic such as data packets. In a particular embodiment, communication interfaces 228 comprise one or more physical NICs. These NICs may enable communication between any suitable element of platform resources 210 (e.g., processing resources 212 or memory 214) and another device coupled to network 208 (e.g., elements of other platforms or remote computing devices coupled to network 208 through one or more networks).

Platform resources 210 may receive and perform any suitable types of workloads. A workload may include any request to utilize one or more resources of platform resources 210, such as one or more cores or associated logic. For example , a workload may comprise a request to instantiate a software component, such as an I/O device driver 224 or guest system 222; a request to process a network packet received from a microservices container 232A, 232B (collectively referred to herein as microservice containers 232) or device external to platform 202A (such as a network node coupled to network 208); a request to execute a process or thread associated with a guest system 222, an application running on platform 202A, a hypervisor 213 or other operating system running on platform 202A; or other suitable processing request.

A microservice container 232 may emulate a computer system with its own dedicated hardware. A container 232 may refer to a standard unit of software that packages up code and all its dependencies, so the application runs quickly and reliably from one computing environment to another. A container image is a lightweight, standalone, executable package of software that includes components used to run an application: code, runtime, system tools, system libraries and settings. Containers 232 take advantage of a form of operating system (OS) virtualization in which features of the OS are leveraged to both isolate processes and control the amount of CPU, memory, and disk that those processes have access to.

When implementing containers 232, hypervisor 213 may also be referred to as a container runtime. Although implementations herein discuss virtualization of microservice functionality via containers, in some implementations, virtual machines may be hosted by hypervisor 213 and utilized to host microservices and/or other components of a service provided by an application.

A hypervisor 213 (also known as a virtual machine monitor (VMM)) may comprise logic to create and run guest systems 222. The hypervisor 213 may present guest operating systems run by virtual machines with a virtual operating platform (i.e., it appears to the virtual machines that they are running on separate physical nodes when they are actually consolidated onto a single hardware platform) and manage the execution of the guest operating systems by platform resources 210. Services of hypervisor 213 may be provided by virtualizing in software or through hardware-assisted resources that utilize minimal software intervention, or both. Multiple instances of a variety of guest operating systems may be managed by the hypervisor 213. Each platform 202 may have a separate instantiation of a hypervisor 213.

In implementations herein, the hypervisor 213 may also be implemented as a container runtime environment capable of building and containerizing applications.

Hypervisor 213 may be a native or bare-metal hypervisor that runs directly on platform resources 210 to control the platform logic and manage the guest operating systems. Alternatively, hypervisor 213 may be a hosted hypervisor that runs on a host operating system and abstracts the guest operating systems from the host operating system. Hypervisor 213 may include a virtual switch 238 that may provide virtual switching and/or routing functions to virtual machines of guest systems 222.

Virtual switch 238 may comprise a software element that is executed using components of platform resources 210. In various embodiments, hypervisor 213 may be in communication with any suitable entity (e.g., a SDN controller) which may cause hypervisor 213 to reconfigure the parameters of virtual switch 238 in response to changing conditions in platform 202 (e.g., the addition or deletion of microservice containers 232 or identification of optimizations that may be made to enhance performance of the platform).

The elements of platform resources 210 may be coupled together in any suitable manner. For example, a bus may couple any of the components together. A bus may include any known interconnect, such as a multi-drop bus, a mesh interconnect, a ring interconnect, a point-to-point interconnect, a serial interconnect, a parallel bus, a coherent (e.g., cache coherent) bus, a layered protocol architecture, a differential bus, or a Gunning transceiver logic (GTL) bus, to name a few examples.

Elements of the computer platform 202A may be coupled together in any suitable manner such as through one or more networks 208. A network 208 may be any suitable network or combination of one or more networks operating using one or more suitable networking protocols. A network may represent a series of nodes, points, and interconnected communication paths for receiving and transmitting packets of information that propagate through a communication system. For example, a network may include one or more firewalls, routers, switches, security appliances, antivirus servers, or other useful network devices.

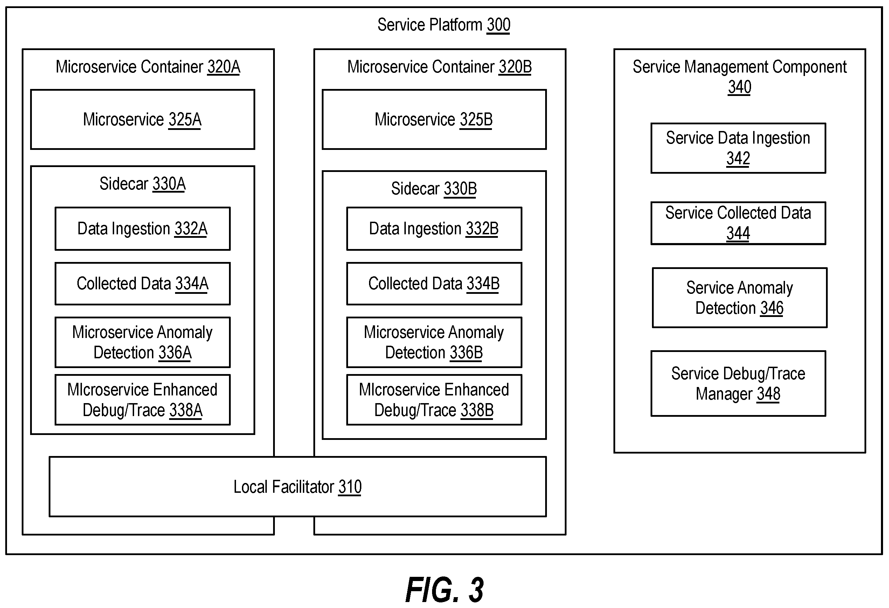

In implementations herein, microservice containers 232 may provide an enhance debug/trace component (not shown), such as enhanced debug/trace component 170 described with respect to FIG. 1. Further details of how the microservice containers 232 implement the enhanced debug/trace component for providing matchmaking-based enhanced debugging for microservices architectures are described below with respect to FIGS. 3-6.

FIG. 3 is a block diagram of a service platform 300 implementing matchmaking-based enhanced debugging for microservices architectures, in accordance with implementations herein. In one implementation, service platform 300 is the same as platform 202 of datacenter system 200 described with respect to FIG. 2. In some implementations, service platform 300 may be hosted in a datacenter that may or may not utilize disaggregated computing. Embodiments herein are not limited to implementation in disaggregated computing environments, and may be deployed across a large spectrum of different datacenter environments. The disaggregated computing datacenter system 200 of FIG. 2 is provided as an example implementation for service platform 300 and is not intended to limit embodiments herein.

In one implementation, service platform 300 may host a service implemented with one or more microservice containers 320A, 320B (collectively referred to herein as microservice container 320). Microservice containers 320 may be the same as microservice containers 232 described with respect to FIG. 2. The service may be orchestrated and manager using service management component 340. Service management component 340 may be implemented by hardware, software, firmware and/or any combination of hardware, software and/or firmware.

Service platform 300 may function as a host platform for a service, implementing deployed microservices of the service as one or more microservice containers 320 that invoke functionalities of the service. Service platform 300 may represent any suitable computing environment, such as a high-performance computing environment, a data center, a communications service provider infrastructure (e.g., one or more portions of an Evolved Packet Core), an in-memory computing environment, a computing system of a vehicle (e.g., an automobile or airplane), an Internet of Things (IoT) environment, an industrial control system, other computing environment, or combination thereof. In implementations herein, containers 320 may be implemented using hardware circuitry, such as one or more of a CPU, a GPU, a hardware accelerator, and so on. In one embodiment, containers 320 may be implemented using platform 202 described with respect to FIG. 2.

Microservices containers 320 may include logic to implement the functionality of the microservice 325A, 325B (collectively referred to herein as microservices 325) and a sidecar 330A, 330B (collectively referred to herein as sidecars 330. A sidecar 330 can be a container that runs on the same pod as the microservice 325. As depicted herein, sidecar 330 is illustrated as part of the microservice container 320, but sidecar 330 may be implemented as a separate container then microservice 325 functionality in some implementations.

In implementations herein, sidecar 330 may include one or more components to support matchmaking-based enhanced debugging for microservices architectures. These components can include data ingestion 332A, 332B (collectively referred to herein as data ingestion 332), collected data 334A, 334B (data stores collectively referred to as collected data 334), microservice anomaly detection 336A, 336B (collectively referred to as microservice anomaly detection 336), and microservice enhanced debug/trace 338A, 338B (collectively referred to herein as microservice enhanced debug/trace 338).

A local facilitator 310 is connected to the sidecars 330 and can operate in a privileged space of the microservice containers 320. In one implementation, local facilitator 310 is a privileged daemon with access to low-level information. For example, local facilitator 310 has access to low-level software telemetry and hardware data, such as registries.

Service platform 300 also includes a service management component 340. Service management component 340 may be implemented using hardware circuitry, such as one or more of a CPU, a GPU, a hardware accelerator, and so on. In one embodiment, service management component 340 may be implemented using platform 202 described with respect to FIG. 2. More generally, the example service management component 340 may be implemented by hardware, software, firmware and/or any combination of hardware, software and/or firmware. Thus, for example, the service management component 340 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)).

In one implementation, service management component 340 operates to control management and/or orchestration of resources, such as microservices, for a service of a service mesh hosted by a datacenter, such as datacenter system 100 of FIG. 1. Service management component 340 may located at the same nodes or on a different node of microservice containers 320 in the service platform 300.

Service management component 340 may include one or more components to support matchmaking-based enhanced debugging for microservices architectures. These components can include service data ingestion 342, service collected data 344 (data store), service anomaly detection 346, and service debug/trace manager 348.

In implementations herein, the microservice containers 320 and service management component 340 provide for matchmaking-based enhanced debugging for microservices architectures. In one implementation, the sidecar 330 for each microservice container 320 includes a data ingestion component 332 that receives telemetry data of the service platform 300 that is pertinent to the microservice 325. This telemetry data can include lower-level layers in the architecture (e.g., privileged space) and application (microservice 325) telemetry data and logs (e.g., user space). The collected data 334 maintains this microservice-related data as historic data. The microservice anomaly detection component 336 continuously analyzes the data stored in the collected data 334 to identify any deviations from normal or typical behavior. The microservice enhanced debug/trace component 338 manage the microservice container 320 to enable different modes of the microservice container 320, including a production (performance) mode and a debug mode, based on a detected anomaly by the microservice anomaly detection component 336.

The service management component 340 includes a similar set of components 342-248, but at a higher level (e.g., per service/application), which can monitor the behavior of a group of microservices 325 interacting together to achieve a certain goal.

In implementations herein, the sidecar 330 per microservice 325 allows for distributed tracing as a streaming service, with tag information generated for the trace data by the sidecar 330. The distributed tracing is triggered on-demand by the microservice anomaly detection component 336. The on-demand distributed tracing per microservice container 320 helps to reduce the data traffic in the service platform 300.

The microservice anomaly detection component 336 analyzes telemetry data of the platform that is pertinent to the microservice 325. As noted above, this telemetry data can include lower-level layers in the service platform 300 (e.g., privileged space) and can include application (microservice 325) telemetry data and logs (e.g., user space). The microservice anomaly detection component 336 can provide hooks to capture errors in the applications (e.g., application service level objective (SLO) dictates processing at 30fps, but instead the application is processing at 28fps). In implementations herein, the microservice anomaly detection component 336 can consider infrastructure and application SLOs.

To obtain the collected data 334, the microservice anomaly detection component 336 can query the information available in the user space and, in addition, can invoke the local facilitator 310. The local facilitator 310 is connected to the sidecars 330 and has access to low level software telemetry and hardware data such as registries. As such, the local facilitator 310 can query the state of the service platform 300. Based on the collected data 334, the microservice anomaly detection component 336 can determine whether there are any deviations from normal or typical behavior. If a deviation is detection, the microservice anomaly detection component 336 can indicate the anomaly, including its type, to the microservice enhanced debug/trace component 338.

When an anomaly is detected, the microservice enhanced debug/trace component 338 can cause a debug mode to be enabled for the microservice container 320. The debug mode may be dynamically (e.g., during runtime) scalable in terms of the number and/or amount of information being traced in the microservice container 320. For example, the debug mode may set an amount of data collected for the microservice container 320 based on one or more of the type of anomaly or a service level agreement (SLA) corresponding to the microservice 325. In some implementations, the debug mode can be a debug mirror mode where duplicate resources (e.g., one or more mirror microservice container 320 are deployed to run an identical set of operations as the primary microservice container 320 with debug mode enabled in the mirror microservice containers 320). This debug mirror mode may be implemented for non-intrusive tracing purposes and/or for performance-critical microservices, for example.

The type of the anomaly can be used to determine what queries to run and for how long in the enabled debug mode. For example, the following possible implementations of queries to run in an enabled debug mode include (1) predefined set of queries to perform. E.g., check registry X, analyze memory consumption, etc.; (2) using supervised learning (SVM) to identify the possible actions, or reinforcement learning based on rewards; and/or (3) using unsupervised learning utilizing clusters where there is no explicit information, and the objective is to find useful and desired metrics on a trialand-error basis.

Once debug mode is enabled, a target set of data points intended to be collected is set (depending on the type of anomaly, as discussed above). Trace and performance telemetry collection proceeds simultaneously for different components in a stack where the components do not all run at the same privilege; for example, PMU counters or device counters contain indications of activities or errors that span more than just the microservice(s) that are of interest. In some cases, these counters, OS activity traces, etc., should be processed separately and the portions specific to a given microservice should be broken out and/or projected. For example, this may be the case with Wireshark traces, KU traces, etc. In some implementations, based on provisioned policies, the data ingestion component 332 can obtain encrypted blobs from various components, which can be archived with appropriate metadata.

When the data ingestion component 332 starts receiving data coming from user and privilege spaces as part of the enabled debug mode, the microservice enhanced debug/trace component 338 can perform a matchmaking process to analyze and tag the collected data. The microservice enhanced debug/trace component 338 can perform the matchmaking process on the data from privileged space and on the data from user space. During the matchmaking process, each piece of data is timestamped, tagged for context (i.e., source (user or privileged), sub-component, microservice_id, thread_id, etc.), and optionally signed. The matchmaking process can also consider configurations (e.g., microservice pinned to core 1), profiling, and overall context (e.g., timestamps, resource utilization).

Once the debug/trace information is gathered and matched from the matchmaking process, the microservice enhanced debug/trace component 338 makes it available to a next component in the service platform 300, such as a global collection and analysis agent. In one implementation, this global collection and analysis agent works on identifying the possible causes (i.e., clone production systems to reproduce the issue based on the logs and tracing information gathered). In implementations herein, the global collection and analysis agent can be the service debug/trace manager 348 of service management component 340.

The processed data (including timestamped markers and tags in the telemetry stream) enables information streams that should be separated out to be indexed against these markers/tags into the global collection and analysis agent, such as the service debug/trace manager 348 of service management component 340. The global agent (e.g., service debug/trace manager 348) can respond to these markers and return information it indexes for these markers, so that traces for all threads other than the threads identified by the sidecar 330 are anonymized, obfuscated, or normalized out (depending on the privilege of the entity that furnishes the marker along with a query).

In one implementation, once the debug mode information is fully captured, the microservice enhanced debug/trace component 338 can return the microservice container 320 to a performance mode where debug/trace data is no longer being collected. In some implementations, the performance mode may be enabled after expiration of a time window defined for the debug mode. In some implementations, the performance mode may include generating a reduced set of debugging information (as compared to the debug mode).

As previously noted, the service management component 340 includes a similar set of components 342-348, but at a higher level (e.g., per service/application), which can monitor the behavior of a group of microservices 325 interacting together to achieve a certain goal. In some implementations, the service management component 340 may perform a similar process for enhanced debug and trace as performed by the components of the sidecar 330 discussed above.

In one implementation, the service debug/trace manager 348 can generate a configuration overview of the service. The configuration overview can detail hardware and software components of deployed microservices of the service and interactions between the deployed microservices. The service data ingestion component 342 can collect telemetry data of the service and store this collected data in the service collected data 344. The service anomaly detection component 346 can continuously (or periodically) analyze the service collected data 344 to determine whether any anomalies are detected in the service.

Based on a detected anomaly, the service debug/trace manager 348 can identify a set of microservices for which to enable a debug mode. The set of microservice identified can be based on the previously generated configuration overview. In implementations herein, the service debug/trace manager 348 can communicate with the set of microservices to cause the debug mode to be enabled in the set of microservices. Such enabling of the debug mode override, or compliment, the debug mode enabled by the microservice enhance debug/trace component 338 as previously discussed. In one implementation, the debug mode can be enabled at different levels in the set of microservices based on a type of the anomaly and an SLA of the service.

Once the debug mode is enabled at the set of microservice, the service debug/trace manager 348 may receive processed debug and trace data from the set of microservice. In implementations herein, the processed debug and trace data generated during the debug mode and processed with the matchmaking process at the set of microservices, as discussed above. In one implementation, the matchmaking process can attach timestamp and context tags to the processed debug and trace data. The service debug/trace manager 348 can perform a global analysis of the anomaly for the service based on the processed debug and trace data received from the set of microservices and based on the configuration overview. For example, the service debug/trace manager 348 can obtain the data by filtering by microservice_id and obtained the full context for debugging the anomaly of the service.

Embodiments may be provided, for example, as a computer program product which may include one or more machine - readable media having stored thereon machine executable instructions that, when executed by one or more machines such as a computer, network of computers, or other electronic devices, may result in the one or more machines carrying out operations in accordance with embodiments described herein. A machine - readable medium may include, but is not limited to, floppy diskettes, optical disks, CD - ROMs (Compact Disc - Read Only Memories), and magneto - optical disks, ROMs, RAMS, EPROMs (Erasable Programmable Read Only Memories), EEPROMs (Electrically Erasable Programmable Read Only Memories), magnetic or optical cards, flash memory, or other type of media / machine - readable medium suitable for storing machine - executable instructions.

Moreover, embodiments may be downloaded as a computer program product, wherein the program may be transferred from a remote computer (e.g., a server) to a requesting computer (e.g., a client) by way of one or more data signals embodied in and / or modulated by a carrier wave or other propagation medium via a communication link (e.g., a modem and / or network connection).

Throughout the document, term "user" may be interchangeably referred to as "viewer", "observer", "speaker", "person", "individual", "end - user", and / or the like. It is to be noted that throughout this document, terms like "graphics domain" may be referenced interchangeably with "graphics processing unit", "graphics processor", or simply "GPU" and similarly, "CPU domain" or "host domain" may be referenced interchangeably with "computer processing unit", "application processor", or simply "CPU".

It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", "software package", and the like, may be used interchangeably throughout this document. Also, terms like "job", "input", "request", "message ", and the like, may be used interchangeably throughout this document.

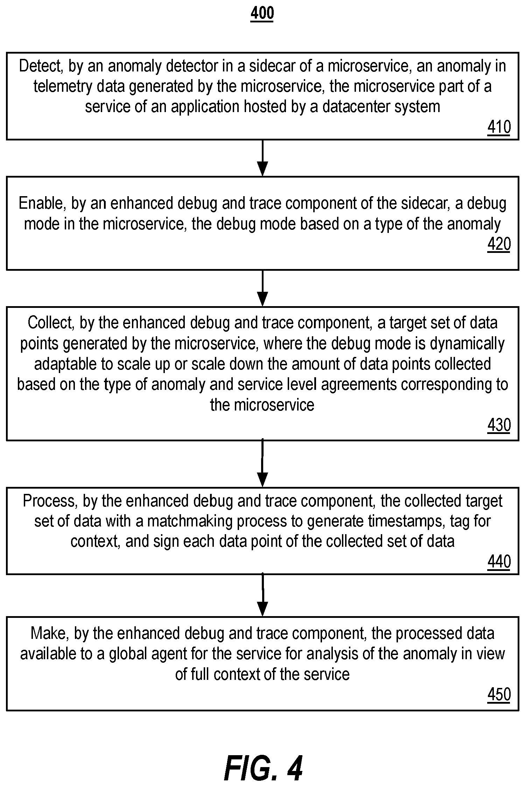

**FIG. 4** is a flow diagram illustrating an embodiment of a method 400 for a microservice-level implementation of matchmaking-based enhanced debugging for microservices architectures. Method 400 may be performed by processing logic that may comprise hardware (e.g., circuitry, dedicated logic, programmable logic, etc.), software (such as instructions run on a processing device), or a combination thereof. More particularly, the method 400 may be implemented in one or more modules as a set of logic instructions stored in a machine- or computer-readable storage medium (also referred to herein as a non-transitory computer-readable storage medium) such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

The process of method 400 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-3 may not be repeated or discussed hereafter. In one implementation, a datacenter system implementing a sidecar in a microservice container, such as processing device executing a sidecar 330 of microservice container 320 of service platform 300 of FIG. 3, may perform method 400.

The example process of method 400 of FIG. 4 begins at block 410 where a processing device executing the sidecar may detect, by an anomaly detector of the sidecar of the microservice container, an anomaly in telemetry data generated by the microservice. In one implementation, the microservice part of a service of an application hosted by a datacenter system. At block 420, the processing device may enable, by an enhanced debug and trace component of the sidecar, a debug mode in the microservice, where the debug mode based on a type of the anomaly.

Subsequently, at block 430, the processing device may collect, by the enhanced debug and trace component, a target set of data points generated by the microservice. In one implementation, the debug mode is dynamically adaptable to scale up or scale down the amount of data points collected based on the type of anomaly and service level agreements corresponding to the microservice. At block 440, the processing device may process, by the enhanced debug and trace component, the collected target set of data with a matchmaking process to generate timestamps, tag for context, and sign each data point of the collected set of data. Lastly, at block 450, the processing device may make, by the enhanced debug and trace component, the processed data available to a global agent for the service for analysis of the anomaly in view of full context of the service.

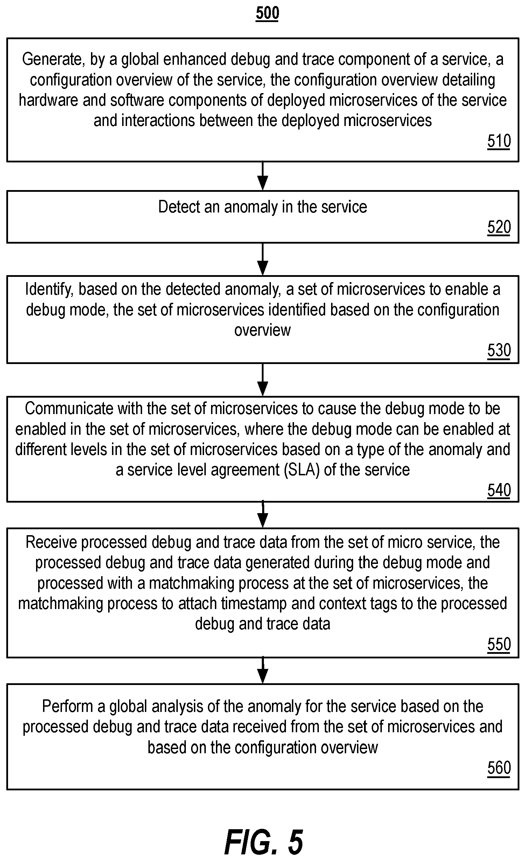

**FIG.** 5 is a flow diagram illustrating an embodiment of a method 500 for a service-level implementation of matchmaking-based enhanced debugging for microservices architectures. Method 500 may be performed by processing logic that may comprise hardware (e.g., circuitry, dedicated logic, programmable logic, etc.), software (such as instructions run on a processing device), or a combination thereof. More particularly, the method 500 may be implemented in one or more modules as a set of logic instructions stored in a machine- or computer-readable storage medium (also referred to herein as a non-transitory computer-readable storage medium) such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

The process of method 500 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-4 may not be repeated or discussed hereafter. In one implementation, a datacenter system implementing a service management component of a service platform, such as a processing device executing a service management component 340 of service platform 300 of FIG. 3, may perform method 500.

The example process of method 500 of FIG. 5 begins at block 510 where the processing device may generate, by a global enhanced debug and trace component of a service, a configuration overview of the service. In one implementation, the configuration overview can detail hardware and software components of deployed microservices of the service and interactions between the deployed microservices. At block 520, the processing device may detect an anomaly in the service.

Subsequently, at block 530, the processing device may identify, based on the detected anomaly, a set of microservices to enable a debug mode, the set of microservices identified based on the configuration overview. At block 540, the processing device may communicate with the set of microservices to cause the debug mode to be enabled in the set of microservices. In one implementation, the debug mode can be enabled at different levels in the set of microservices based on a type of the anomaly and an SLA of the service.

Then, at block 550, the processing device may receive processed debug and trace data from the set of microservice, the processed debug and trace data generated during the debug mode and processed with a matchmaking process at the set of microservices. In one implementation, the matchmaking process can attach timestamp and context tags to the processed debug and trace data. Lastly, at block 560, the processing device may perform a global analysis of the anomaly for the service based on the processed debug and trace data received from the set of microservices and based on the configuration overview.

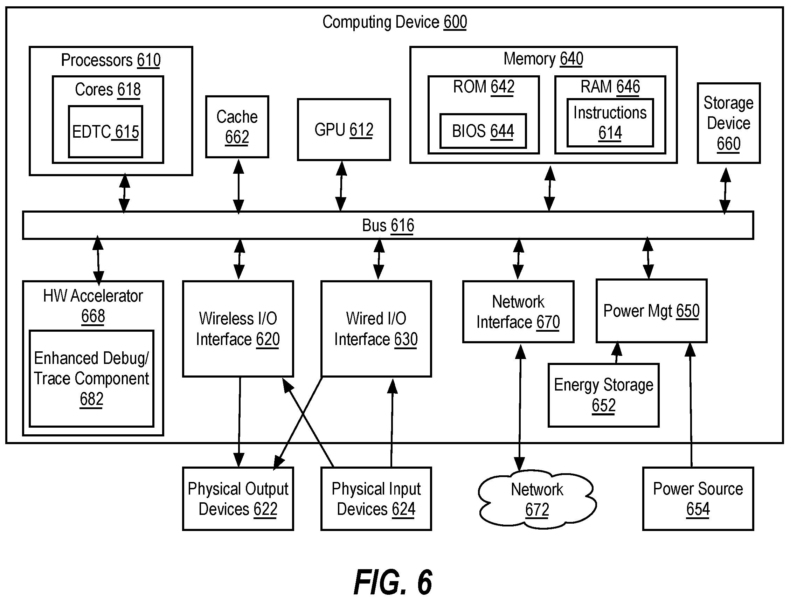

**FIG. 6** is a schematic diagram of an illustrative electronic computing device 600 to enable matchmaking-based enhanced debugging for microservices architectures, according to some embodiments. In some embodiments, the computing device 600 includes one or more processors 610 including one or more processor cores 618 including an enhanced debug/trace component (EDTC) 615, such as an enhanced debug/trace component 170, 338, 348 described with respect to FIGS. 1 and 3. In some embodiments, the one or more processor cores 618 establish a TEE to host the EDTC 615. In some embodiments, the computing device 600 includes a hardware accelerator 668, the hardware accelerator 668 including an enhanced debug/trace component 682, such as enhanced debug/trace component 170, 338, 348 described with respect to FIGS. 1 and 3. In some embodiments, the hardware accelerator 668 establishes a TEE to host the enhanced debug/trace component 682. In some embodiments, the computing device is to provide matchmaking-based enhanced debugging for microservices architectures, as provided in FIGS. 1-5.

The computing device 600 may additionally include one or more of the following: cache 662, a graphical processing unit (GPU) 612 (which may be the hardware accelerator in some implementations), a wireless input/output (I/O) interface 620, a wired I/O interface 630, system memory 640 (e.g., memory circuitry), power management circuitry 650, non-transitory storage device 660, and a network interface 670 for connection to a network 672. The following discussion provides a brief, general description of the components forming the illustrative computing device 600. Example, non-limiting computing devices 600 may include a desktop computing device, blade server device, workstation, or similar device or system.

In embodiments, the processor cores 618 are capable of executing machine-readable instruction sets 614, reading data and/or instruction sets 614 from one or more storage devices 660 and writing data to the one or more storage devices 660. Those skilled in the relevant art can appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like.

The processor cores 618 may include any number of hardwired or configurable circuits, some or all of which may include programmable and/or configurable combinations of electronic components, semiconductor devices, and/or logic elements that are disposed partially or wholly in a PC, server, or other computing system capable of executing processor-readable instructions.

The computing device 600 includes a bus or similar communications link 616 that communicably couples and facilitates the exchange of information and/or data between various system components including the processor cores 618, the cache 662, the graphics processor circuitry 612, one or more wireless I/O interfaces 620, one or more wired I/O interfaces 630, one or more storage devices 660, and/or one or more network interfaces 670. The computing device 600 may be referred to in the singular herein, but this is not intended to limit the embodiments to a single computing device 600, since in certain embodiments, there may be more than one computing device 600 that incorporates, includes, or contains any number of communicably coupled, collocated, or remote networked circuits or devices.

The processor cores 618 may include any number, type, or combination of currently available or future developed devices capable of executing machine-readable instruction sets.

The processor cores 618 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in FIG. 6 are of conventional design. Consequently, such blocks are not described in further detail herein, as they can be understood by those skilled in the relevant art. The bus 616 that interconnects at least some of the components of the computing device 600 may employ any currently available or future developed serial or parallel bus structures or architectures.

The system memory 640 may include read-only memory ("ROM") 642 and random access memory ("RAM") 646. A portion of the ROM 642 may be used to store or otherwise retain a basic input/output system ("BIOS") 644. The BIOS 644 provides basic functionality to the computing device 600, for example by causing the processor cores 618 to load and/or execute one or more machine-readable instruction sets 614. In embodiments, at least some of the one or more machine-readable instruction sets 614 cause at least a portion of the processor cores 618 to provide, create, produce, transition, and/or function as a dedicated, specific, and particular machine, for example a word processing machine, a digital image acquisition machine, a media playing machine, a gaming system, a communications device, a smartphone, or similar.

The computing device 600 may include at least one wireless input/output (I/O) interface 620. The at least one wireless I/O interface 620 may be communicably coupled to one or more physical output devices 622 (tactile devices, video displays, audio output devices, hardcopy output devices, etc.). The at least one wireless I/O interface 620 may communicably couple to one or more physical input devices 624 (pointing devices, touchscreens, keyboards, tactile devices, etc.). The at least one wireless I/O interface 620 may include any currently available or future developed wireless I/O interface. Example wireless I/O interfaces include, but are not limited to: BLUETOOTH^{®}, near field communication (NFC), and similar.

The computing device 600 may include one or more wired input/output (I/O) interfaces 630. The at least one wired I/O interface 630 may be communicably coupled to one or more physical output devices 622 (tactile devices, video displays, audio output devices, hardcopy output devices, etc.). The at least one wired I/O interface 630 may be communicably coupled to one or more physical input devices 624 (pointing devices, touchscreens, keyboards, tactile devices, etc.). The wired I/O interface 630 may include any currently available or future developed I/O interface. Example wired I/O interfaces include, but are not limited to: universal serial bus (USB), IEEE 1394 ("FireWire"), and similar.

The computing device 600 may include one or more communicably coupled, non-transitory, data storage devices 660. The data storage devices 660 may include one or more hard disk drives (HDDs) and/or one or more solid-state storage devices (SSDs). The one or more data storage devices 660 may include any current or future developed storage appliances, network storage devices, and/or systems. Non-limiting examples of such data storage devices 660 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more data storage devices 660 may include one or more removable storage devices, such as one or more flash drives, flash memories, flash storage units, or similar appliances or devices capable of communicable coupling to and decoupling from the computing device 600.

The one or more data storage devices 660 may include interfaces or controllers (not shown) communicatively coupling the respective storage device or system to the bus 616. The one or more data storage devices 660 may store, retain, or otherwise contain machine-readable instruction sets, data structures, program modules, data stores, databases, logical structures, and/or other data useful to the processor cores 618 and/or graphics processor circuitry 612 and/or one or more applications executed on or by the processor cores 618 and/or graphics processor circuitry 612. In some instances, one or more data storage devices 660 may be communicably coupled to the processor cores 618, for example via the bus 616 or via one or more wired communications interfaces 630 (e.g., Universal Serial Bus or USB); one or more wireless communications interfaces 620 (e.g., Bluetooth^{®}, Near Field Communication or NFC); and/or one or more network interfaces 670 (IEEE 802.3 or Ethernet, IEEE 802.11, or Wi-Fi^{®}, etc.).

Processor-readable instruction sets 614 and other programs, applications, logic sets, and/or modules may be stored in whole or in part in the system memory 640. Such instruction sets 614 may be transferred, in whole or in part, from the one or more data storage devices 660. The instruction sets 614 may be loaded, stored, or otherwise retained in system memory 640, in whole or in part, during execution by the processor cores 618 and/or graphics processor circuitry 612.

The computing device 600 may include power management circuitry 650 that controls one or more operational aspects of the energy storage device 652. In embodiments, the energy storage device 652 may include one or more primary (i.e., nonrechargeable) or secondary (i.e., rechargeable) batteries or similar energy storage devices. In embodiments, the energy storage device 652 may include one or more supercapacitors or ultracapacitors. In embodiments, the power management circuitry 650 may alter, adjust, or control the flow of energy from an external power source 654 to the energy storage device 652 and/or to the computing device 600. The power source 654 may include, but is not limited to, a solar power system, a commercial electric grid, a portable generator, an external energy storage device, or any combination thereof.

For convenience, the processor cores 618, the graphics processor circuitry 612, the wireless I/O interface 620, the wired I/O interface 630, the storage device 660, and the network interface 670 are illustrated as communicatively coupled to each other via the bus 616, thereby providing connectivity between the above-described components. In alternative embodiments, the above-described components may be communicatively coupled in a different manner than illustrated in FIG. 6. For example, one or more of the above-described components may be directly coupled to other components, or may be coupled to each other, via one or more intermediary components (not shown). In another example, one or more of the above-described components may be integrated into the processor cores 618 and/or the graphics processor circuitry 612. In some embodiments, all or a portion of the bus 616 may be omitted and the components are coupled directly to each other using suitable wired or wireless connections.

The foregoing description and drawings are to be regarded in an illustrative rather than a restrictive sense. Persons skilled in the art can understand that various modifications and changes may be made to the embodiments described herein without departing from the scope of the features set forth in the appended claims.

## Claims

1. A method comprising:
detecting, by an anomaly detector in a sidecar of a microservice, an anomaly in telemetry data generated by the microservice, the microservice is hosted in a container executed by a processor and is part of a service of an application;
enabling, by an enhanced debug and trace component of the sidecar, a debug mode in the microservice;
collecting, by the enhanced debug and trace component, a target set of data points generated by the microservice;
processing, by the enhanced debug and trace component, the target set of data points with a matchmaking process to generate a timestamp and a tag for a context for each data point of the target set of data points; and
making, by the enhanced debug and trace component, the target set of data points processed with the matchmaking process available to a global agent of the service for analysis of the anomaly;
**characterized in that**
the debug mode is based on a type of the anomaly.

2. The method of claim 1, wherein the debug mode is adaptable during runtime of the microservice to scale up or scale down an amount of data points collected based on the type of anomaly and a service level agreement corresponding to the microservice.

3. The method of any one of claims 1-2, wherein the global agent is to:
generate a configuration overview of the service, the configuration overview detailing hardware and software components of deployed microservices of the service and interaction between the deployed microservices of the service;
receive other target sets of data points processed with the matchmaking process from one or more other microservices of the service; and
perform a global analysis of the anomaly for the service based on the target set of data points received from the microservice and the other target sets of data points received from the one or more other microservices, wherein the global analysis is further based on the configuration overview.

4. The method of any one of claims 1-3, wherein the global agent is further to:
detect a service-level anomaly in the service;
identify, based on the service-level anomaly, a set of microservices for which to enable a debug mode, the set of microservices identified based on the configuration overview; and
communicate with the set of microservices to cause the debug mode to be enabled in the set of microservices, where the debug mode is enabled at different levels in the set of microservices based on a type of the service-level anomaly and a service level agreement of the service.

5. The method of any one of claims 1-4, wherein target set of data points comprise data generated from different components of a platform hosting the container, wherein the different components comprise indications of activities of errors that span more than the container, and wherein the different components comprise at least counters or operating system (OS) activity traces.

6. The method of any one of claims 1-5, wherein one or more data points of the target set of data points comprises encrypted data.

7. The method of any one of claims 1-6, wherein a local facilitator associated with the container is to collect a portion of the target set of data points from a privileged space of a platform hosting the container.

8. The method of any one of claims 1-7, wherein the tag for context comprises at least one of a source of the data point, a sub-component associated with the data point, a microservice identifier (ID), or a thread ID, and wherein the source comprises at least one user space or privileged space.

9. The method of any one of claims 1-8, wherein enabling the debug mode comprises deploying one or more duplicate microservice containers to run an identical set of operations as the container of the microservice and collecting the target set of data points generated from the one or more duplicate microservice containers.

10. The method of any one of claims 1-9, wherein the microservice is configured to at least one of run on a same node as one or more other microservices of the service, or run on a different node as one or more other microservices of the service.

11. A system for facilitating matchmaking-based enhanced debugging for microservices architectures, the system comprising:
a memory to store a block of data; and
a processor communicably coupled to the memory, the processor to:
detect, by an anomaly detector in a sidecar of a microservice hosted by a container, an anomaly in telemetry data generated by the microservice, the microservice hosted in a container executed by the processor and part of a service of an application;
enable, by an enhanced debug and trace component of the sidecar, a debug mode in the microservice;
collect, by the enhanced debug and trace component, a target set of data points generated by the microservice;
process, by the enhanced debug and trace component, the target set of data points with a matchmaking process to generate a timestamp and a tag for a context for each data point of the target set of data points; and
make, by the enhanced debug and trace component, the target set of data points processed with the matchmaking process available to a global agent of the service for analysis of the anomaly,
**characterized in that**
the debug mode based on a type of the anomaly.

12. The system of claim 11, further configured to perform the method of any one of the claims 2-10.

13. At least one machine readable medium comprising a plurality of instructions that in response to being executed on a computing device, cause the computing device to carry out a method according to any one of claims 1-10.

## Patentansprüche

1. Verfahren, umfassend:
Erkennen, durch einen Anomaliendetektor in einem Sidecar eines Mikrodienstes, einer Anomalie in Telemetriedaten, die durch den Mikrodienst erzeugt werden, wobei der Mikrodienst, der in einem Container untergebracht ist, der von einem Prozessor ausgeführt wird und Teil eines Dienstes einer Anwendung ist;
Aktivieren, durch eine erweiterte Fehlerbeseitigungsund Verfolgungskomponente des Sidecars, eines Fehlerbeseitigungsmodus in dem Mikrodienst;
Sammeln, durch die erweiterte Fehlerbeseitigungs- und Verfolgungskomponente, eines Zielsatzes von Datenpunkten, die durch den Mikrodienst erzeugt werden;
Verarbeiten, durch die erweiterte Fehlerbeseitigungsund Verfolgungskomponente, des Zielsatzes von Datenpunkten mit einem Vernetzungsprozess, um eine Zeitmarke und ein Tag für einen Kontext für jeden Datenpunkt des Zielsatzes von Datenpunkten zu erzeugen; und
zur Verfügung stellen, durch die erweiterte Fehlerbeseitigungs- und Verfolgungskomponente, des Zielsatzes von Datenpunkten, der mit dem Vernetzungsprozess verarbeitet wurde, für einen globalen Agenten des Dienstes für eine Analyse der Anomalie;
**dadurch gekennzeichnet, dass**
der Fehlerbeseitigungsmodus auf einem Typ der Anomalie beruht.

2. Verfahren nach Anspruch 1, wobei der Fehlerbeseitigungsmodus während der Laufzeit des Mikrodienstes anpassbar ist, einer Menge von Datenpunkten heraufzuskalieren und herunterzuskalieren, die basierend auf dem Typ der Anomalie und einer Dienstleistungsvereinbarung, die dem Mikrodienst entspricht, gesammelt wurden.

3. Verfahren nach einem der Ansprüche 1 bis 2, wobei der globale Agent geeignet ist zum:
Erzeugen eines Konfigurationsüberblicks des Dienstes, wobei der Konfigurationsüberblick die Hardware- und Softwarekomponenten von eingesetzten Mikrodiensten des Dienstes und eine Interaktion zwischen den eingesetzten Mikrodiensten des Dienstes ausführlich beschreibt;
Empfangen von weiteren Zielsätzen von Datenpunkten, die mit dem Vernetzungsprozess verarbeitet wurden, von einem oder mehreren anderen Mikrodiensten des Dienstes; und
Durchführen einer globalen Analyse der Anomalie für den Dienst, basierend auf dem Zielsatz von Datenpunkten, die von dem Mikrodienst empfangen wurden, und auf den anderen Zielsätzen von Datenpunkten, die von dem einen oder den mehreren Mikrodiensten empfangen wurden, wobei die globale Analyse ferner auf dem Konfigurationsüberblick beruht.

4. Verfahren nach einem der Ansprüche 1 bis 3, wobei der globale Agent ferner geeignet ist zum:
Erkennen einer Dienststufenanomalie in dem Dienst;
Identifizieren, basierend auf der Dienststufenanomalie, eines Satzes von Mikrodiensten, für die ein Fehlerbeseitigungsmodus aktiviert werden muss, wobei der Satz von Mikrodiensten basierend auf dem Konfigurationsüberblick identifiziert wird; und
Kommunizieren mit dem Satz von Mikrodiensten, um zu veranlassen, dass der Fehlerbeseitigungsmodus in dem Satz von Mikrodiensten aktiviert wird, wobei der Fehlerbeseitigungsmodus auf verschiedenen Ebenen in dem Satz von Mikrodiensten, basierend auf einem Typ der Dienststufenanomalie und einer Dienstleistungsvereinbarung des Dienstes aktiviert wird.

5. Verfahren nach einem der Ansprüche 1 bis 4, wobei der Zielsatz von Datenpunkten Daten umfasst, die von verschiedenen Komponenten einer Plattform erzeugt werden, auf welcher der Container untergebracht ist, wobei die verschiedenen Komponenten Anzeigen von Aktivitäten von Fehlern umfassen, die sich über mehr als den Container erstrecken, und wobei die verschiedenen Komponenten mindestens Zähler oder Aktivitätsverfolgungen eines Betriebssystems (OS) umfassen.

6. Verfahren nach einem der Ansprüche 1 bis 5, wobei ein oder mehrere Datenpunkte des Zielsatzes von Datenpunkten verschlüsselte Daten umfassen.

7. Verfahren nach einem der Ansprüche 1 bis 6, wobei ein lokaler Vermittler, der mit dem Container assoziiert ist, geeignet ist zum Sammeln eines Anteils des Zielsatzes von Datenpunkten aus einem privilegierten Bereich einer Plattform zu sammeln, auf welcher der Container untergebracht ist.

8. Verfahren nach einem der Ansprüche 1 bis 7, wobei das Tag für den Kontext mindestens eine von einer Quelle des Datenpunkts, eine Teilkomponente, die mit dem Datenpunkt assoziiert ist, eine Mikrodienstkennung (Mikrodienst-ID) oder eine Thread-ID umfasst und wobei die Quelle mindestens einen Benutzerbereich oder einen privilegierten Bereich umfasst.

9. Verfahren nach einem der Ansprüche 1 bis 8, wobei das Aktivieren des Fehlerbeseitigungsmodus ein Einsetzen von einem oder mehreren Duplikatmikrodienstcontainern umfasst, um einen identischen Satz von Operationen als den Container des Mikrodienstes auszuführen, und ein Sammeln des Zielsatzes von Datenpunkten umfasst, die aus dem einen oder den mehreren Duplikatmikrodienstcontainern erzeugt werden.

10. Verfahren nach einem der Ansprüche 1 bis 9, wobei der Mikrodienst konfiguriert ist, um mindestens als ein oder mehrere andere Mikrodienste des Dienstes in einem gleichen Knoten ausgeführt zu werden und/oder als ein oder mehrere andere Mikrodienste des Dienstes in einem anderen Knoten ausgeführt zu werden.

11. System zum Vereinfachen einer vernetzungsbasierten Fehlerbeseitigung für Mikrodienstarchitekturen, wobei das System, umfasst:
einen Speicher zum Speichern eines Datenblocks; und
einen Prozessor, der kommunikativ mit dem Speicher gekoppelt ist, wobei der Prozessor geeignet ist zum:
Erkennen, durch einen Anomaliendetektor in einem Sidecar eines Mikrodienstes, der in einem Container untergebracht ist, einer Anomalie in Telemetriedaten, die durch den Mikrodienst erzeugt werden, wobei der Mikrodienst, der in einem Container untergebracht ist, der von dem Prozessor ausgeführt wird und Teil eines Dienstes einer Anwendung ist;
Aktivieren, durch eine erweiterte Fehlerbeseitigungsund Verfolgungskomponente des Sidecars, eines Fehlerbeseitigungsmodus in dem Mikrodienst;
Sammeln, durch die erweiterte Fehlerbeseitigungs- und Verfolgungskomponente, eines Zielsatzes von Datenpunkten, die durch den Mikrodienst erzeugt werden;
Verarbeiten, durch die erweiterte Fehlerbeseitigungsund Verfolgungskomponente, des Zielsatzes von Datenpunkten mit einem Vernetzungsprozess, um eine Zeitmarke und ein Tag für einen Kontext für jeden Datenpunkt des Zielsatzes von Datenpunkten zu erzeugen; und
zur Verfügung stellen, durch die erweiterte Fehlerbeseitigungs- und Verfolgungskomponente, des Zielsatzes von Datenpunkten, der mit dem Vernetzungsprozess verarbeitet wurde, für einen globalen Agenten des Dienstes für eine Analyse der Anomalie;
**dadurch gekennzeichnet, dass**
der Fehlerbeseitigungsmodus auf einem Typ der Anomalie beruht.

12. System nach Anspruch 11, das ferner konfiguriert ist, um das Verfahren nach einem der Ansprüche 2 bis 10 durchzuführen.

13. Mindestens ein maschinenlesbares Medium, das eine Vielzahl von Anweisungen umfasst, die, als Reaktion auf ihre Ausführung in einer Computervorrichtung, die Computervorrichtung veranlassen, ein Verfahren nach einem der Ansprüche 1 bis 10 auszuführen.

## Revendications

1. Procédé, comprenant :
la détection, par un détecteur d'anomalie dans un sidecar d'un microservice, d'une anomalie dans des données de télémesure générées par le microservice, le microservice étant hébergé dans un conteneur exécuté par un processeur et faisant partie d'un service d'une application ;
l'activation, par un composant de débogage et de traçage améliorés du sidecar, d'un mode de débogage dans le microservice ;
la collecte, par le composant de débogage et de traçage améliorés, d'un ensemble cible de points de données généré par le microservice ;
le traitement, par le composant de débogage et de traçage améliorés, de l'ensemble cible de points de données au moyen d'un processus de mise en relation pour générer un horodatage et une étiquette pour un contexte pour chaque point de données de l'ensemble cible de points de données ; et
la mise à disposition, par le composant de débogage et de traçage améliorés, de l'ensemble cible de points de données traité au moyen du processus de mise en relation auprès d'un agent global du service pour analyse de l'anomalie ;
**caractérisé en ce que**
le mode de débogage est basé sur un type de l'anomalie.

2. Procédé selon la revendication 1, dans lequel le mode de débogage est adaptable au moment de l'exécution du microservice pour augmenter ou diminuer une quantité de points de données collectés sur la base du type d'anomalie et d'un accord sur le niveau de service correspondant au microservice.

3. Procédé selon l'une quelconque des revendications 1 à 2, dans lequel l'agent global est destiné à :
générer une vue d'ensemble de la configuration du service, la vue d'ensemble de la configuration présentant dans le détail les composants matériels et logiciels de microservices déployés du service et l'interaction entre les microservices déployés du service ;
recevoir d'autres ensembles cibles de points de données traités au moyen du processus de mise en relation en provenance d'un ou de plusieurs autres microservices du service ; et
réaliser une analyse globale de l'anomalie pour le service sur la base de l'ensemble cible de points de données reçu en provenance du microservice et des autres ensembles cibles de points de données reçus en provenance des un ou plusieurs autres microservices, l'analyse globale étant basée en outre sur la vue d'ensemble de la configuration.

4. Procédé selon l'une quelconque des revendications 1 à 3, dans lequel l'agent global est destiné en outre à :
détecter une anomalie au niveau du service dans le service ;
identifier, sur la base de l'anomalie au niveau du service, un ensemble de microservices pour lequel il convient d'activer un mode de débogage, l'ensemble de microservices étant identifié sur la base de la vue d'ensemble de la configuration ; et
communiquer avec l'ensemble de microservices pour provoquer l'activation du mode de débogage dans l'ensemble de microservices, le mode de débogage étant activé à différents niveaux dans l'ensemble de microservices sur la base d'un type de l'anomalie au niveau du service et d'un accord sur le niveau de service du service.

5. Procédé selon l'une quelconque des revendications 1 à 4, dans lequel l'ensemble cible de points de données comprend des données générées à partir de différents composants d'une plateforme hébergeant le conteneur, dans lequel les différents composants comprennent des indications d'activités d'erreurs qui s'étendent au-delà du conteneur, et dans lequel les différents composants comprennent au moins des compteurs ou des traces d'activité de système d'exploitation (OS).

6. Procédé selon l'une quelconque des revendications 1 à 5, dans lequel un ou plusieurs points de données de l'ensemble cible de points de données comprennent des données chiffrées.

7. Procédé selon l'une quelconque des revendications 1 à 6, dans lequel un facilitateur local associé au conteneur est destiné à collecter une partie de l'ensemble cible de points de données auprès d'un espace privilégié d'une plateforme hébergeant le conteneur.

8. Procédé selon l'une quelconque des revendications 1 à 7, dans lequel l'étiquette pour le contexte comprend une source du point de données et/ou un sous-composant associé au point de données et/ou un identifiant (ID) de microservice et/ou un ID de thread, et dans lequel la source comprend un espace utilisateur et/ou un espace privilégié.

9. Procédé selon l'une quelconque des revendications 1 à 8, dans lequel l'activation du mode de débogage comprend le déploiement d'un ou de plusieurs conteneurs de microservice dupliqués pour exécuter un ensemble d'opérations identique à celui du conteneur du microservice, et la collecte de l'ensemble cible de points de données généré à partir des un ou plusieurs conteneurs de microservice dupliqués.

10. Procédé selon l'une quelconque des revendications 1 à 9, dans lequel le microservice est configuré pour s'exécuter sur un même nœud que celui d'un ou de plusieurs autres microservices du service et/ou s'exécuter sur un nœud différent de celui d'un ou de plusieurs autres microservices du service.

11. Système destiné à faciliter un débogage amélioré basé sur une mise en relation pour des architectures de microservices, le système comprenant :
une mémoire pour stocker un bloc de données ; et
un processeur couplé de façon communicative à la mémoire, le processeur étant destiné à :
détecter, par un détecteur d'anomalie dans un sidecar d'un microservice hébergé par un conteneur, une anomalie dans des données de télémesure générées par le microservice, le microservice étant hébergé dans un conteneur exécuté par le processeur et faisant partie d'un service d'une application ;
activer, par un composant de débogage et de traçage améliorés du sidecar, un mode de débogage dans le microservice ;
collecter, par le composant de débogage et de traçage améliorés, un ensemble cible de points de données généré par le microservice ;
traiter, par le composant de débogage et de traçage améliorés, l'ensemble cible de points de données au moyen d'un processus de mise en relation pour générer un horodatage et une étiquette pour un contexte pour chaque point de données de l'ensemble cible de points de données ; et
mettre à disposition, par le composant de débogage et de traçage améliorés, l'ensemble cible de points de données traité au moyen du processus de mise en relation auprès d'un agent global du service pour analyse de l'anomalie,
**caractérisé en ce que**
le mode de débogage est basé sur un type de l'anomalie.

12. Système selon la revendication 11, configuré en outre pour réaliser le procédé selon l'une quelconque des revendications 2 à 10.

13. Support(s) lisible(s) par machine comprenant une pluralité d'instructions dont l'exécution sur un dispositif informatique amène le dispositif informatique à mettre en œuvre un procédé selon l'une quelconque des revendications 1 à 10.
